# EUROPEAN PATENT APPLICATION

(11) **EP 2 106 040 A1**
(43) Date of publication of application: **30.09.2009**
(21) Application number: 08773183.2
(22) Date of filing: 14.07.2008
(51) Int. Cl.: H04B 7/26, H04W 84/00

(54) **METHOD, COMMUNICATION SYSTEM AND DEVICE FOR OBTAINING CONNECTION FRAME NUMBER**

(30) Priority: 26.07.2007 CN 200710128485
(71) Applicant: Huawei Technologies Co., Ltd., Longgang District, Shenzhen Guangdong 518129 (CN)
(72) Inventor: YU, Lunfeng, Shenzhen (CN); MIAO, Junhai, Shenzhen (CN); JI, Yongzhao, Shenzhen (CN)
(74) Representative: Kreuz, Georg Maria
(86) International application number: PCT/CN2008/071632
(87) International publication number: WO 2009/012690

(57) **Abstract**

A method, a communication system, and a device for obtaining a connection frame number (CFN) are provided to obtain the CFN under a situation of applying high speed package access (HSPA). The method includes the following steps. A downlink node synchronization request including radio network controller (RNC) time information is sent to a base station through a high-speed downlink shared channel (HS-DSCH) frame protocol (FP). An uplink node synchronization response including base station time information sent from the base station through the HS-DSCH FP is received. A CFN is obtained according to a preset RNC frame number (FN), a preset frame offset, the RNC time information, and the base station time information.

## Description

### CROSS-REFERENCE TO RELATED APPLICATION

The application claims the priority of CN application No. 200710128485.2, filed on July 26, 2007, titled "METHOD, COMMUNICATION SYSTEM, AND RELEVANT DEVICE FOR OBTAINING CONNECTION FRAME NUMBER the entire contents of all of which are incorporated herein by reference.

### FIELD OF THE TECHNOLOGY

The present invention relates to the field of communication technologies, and more particularly to a method, a communication system, and a device for obtaining a connection frame number (CFN).

### BACKGROUND OF THE INVENTION

After a high speed package access (HSPA) is introduced in a wideband code division multiple access (WCDMA) system, a processing capability is enhanced. In order to enhance mobility of user equipment, an interface between two radio network controllers (RNCs) (interface of universal mobile telecommunications system (UMTS) radio network service (IUR)) needs to support the HSPA function.

In the prior art, when a signaling radio bearer (SRB) or a service bearer is on the HSPA (that is, downlink data is borne on a high speed downlink packet access (HSDPA), and uplink data is borne on a high speed uplink packet access (HSUPA)), a dedicated channel (DCH) does not exist, so that the transmission channel synchronization cannot be performed, so a serving radio network controller (SRNC) cannot obtain a connection frame number (CFN).

### SUMMARY OF THE INVENTION

According to the present invention a method, a communication system, and a device for obtaining a CFN are provided, which are capable of obtaining the CFN under a situation of applying an HSPA.

In an implementation form of the present invention a method for obtaining a CFN includes the steps as follows. A downlink node synchronization request including RNC time information is sent to a base station through a high-speed downlink shared channel (HS-DSCH) frame protocol (FP). An uplink node synchronization response including base station time information sent from the base station through the HS-DSCH FP is received. A CFN is obtained according to a preset RNC frame number (FN) (RFN), a preset frame offset, the RNC time information, and the base station time information.

In an implementation form of the present invention a communication system includes an SRNC and a base station.

The SRNC is configured to send a downlink node synchronization request including SRNC time information to the base station through an HS-DSCH FP, receive an uplink node synchronization response including base station time information sent from the base station, and obtain a CFN according to a preset RFN, a preset frame offset, the RNC time information, and the base station time information.

The base station is configured to send the uplink node synchronization response including the base station time information to the SRNC.

In an implementation form of the present invention a network device includes a sending unit, a receiving unit, and a calculating unit. The sending unit is configured to send a downlink node synchronization request including RNC time information to a base station through an HS-DSCH FP. The receiving unit is configured to receive an uplink node synchronization response including base station time information sent from the base station through the HS-DSCH FP. The calculating unit is configured to calculate a CFN according to a preset RFN, a preset frame offset, the RNC time information, and the base station time information.

In an implementation form of the present invention a base station includes a synchronization receiving unit and a feedback unit. The synchronization receiving unit is configured to receive a downlink node synchronization request including RNC time information sent from a RNC. The feedback unit is configured to send an uplink node synchronization response including base station time information to the RNC through an HS-DSCH FP unit.

The present invention has the following advantage.

The time information is interacted between the network device and the base station through a synchronization process, so that the network device may calculate the CFN according to the own RFN, a time difference between the network device and the base station, and the preset frame offset, thereby obtaining the CFN under the situation of applying the HSPA.

### BRIEF DESCRIPTION OF THE DRAWINGS

FIG 1 is a schematic view of a node synchronization process according to an embodiment of the present invention;

FIG 2 is a flow chart of a method for obtaining a CFN according to an embodiment of the present invention;

FIG. 3 is a schematic view of a communication system according to an embodiment of the present invention;

FIG. 4 is a schematic view of an RNC according to an embodiment of the present invention; and

FIG. 5 is a schematic view of a base station according to an embodiment of the present invention.

### DETAILED DESCRIPTION OF THE EMBODIMENTS

The embodiments of the present invention provide a method, a communication system, and a relevant device for obtaining a CFN, which are configured to obtain the CFN under a situation of applying an HSPA.

According to the embodiments of the present invention, in the environment of applying the HSPA, to obtain the CFN, an HS-DSCH FP in an IUR interface signaling protocol 25435 needs to support the node synchronization. Particularly, in this embodiment, parameter information of the HS-DSCH in the FP is modified. The HS-DSCH also called a high-speed downlink shared channel is as shown in the table as follows.

**Table 1**

| Transmission Bearer | Combined Data Frame | Combined Control Frame | | | | | | | |
|---|---|---|---|---|---|---|---|---|---|
| | | Time Adjustment | Downlink Transmission Channel Synchronization | Node Synchronization | Dynamic PUSCH Identity | Time Increasing | Outer Loop Power Control Information Transmission | High Speed Data Channel Capacity Demand | High Speed Data Channel Capacity Distribution |
| RACH | RACH DATA FRAME | no | no | no | no | no | no | no | no |
| FACH | FACH DATA FRAME | yes | yes | yes | no | no | no | no | no |
| PCH | PCH DATA FRAME | yes | yes | yes | no | no | no | no | no |
| DSCH | DSCH DATA FRAME | yes | yes | yes | no | no | no | no | no |
| USCH | USCH DATA FRAME | no | no | no | yes | yes | yes | no | no |
| HS-DSCH | HS-DSCH DATA FRAME | no | no | yes | no | no | no | yes | yes |

In the above table, the parameter of the node synchronization of the HS-DSCH is changed from in the prior art to in the embodiment of the present invention, this enables the FP to support the node synchronization, that is, the RNC may send a node synchronization request to a base station through the modified HS-DSCH FP, and may obtain a node synchronization response returned from the base station.

It may be understood that the FP may be enabled to support the node synchronization by adopting other manners, and it is not limited here.

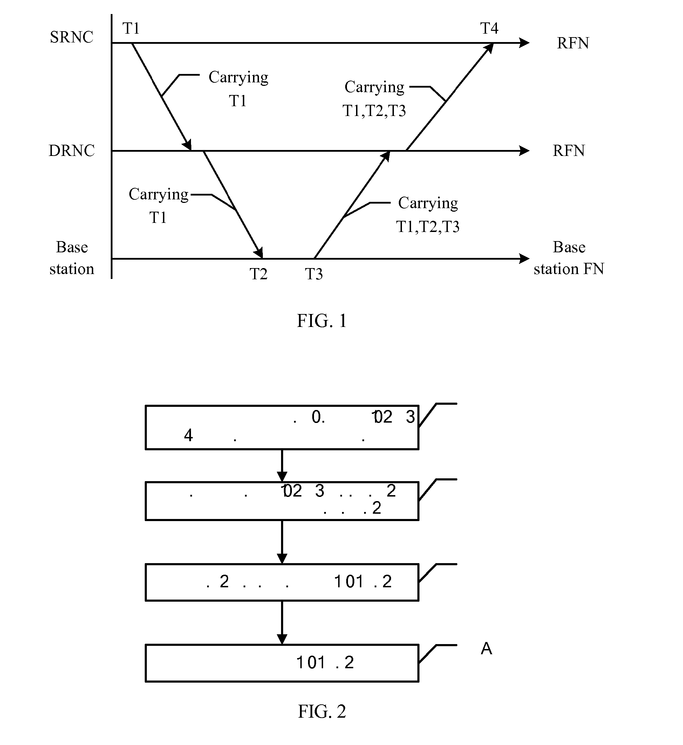

FIG. 1 is a schematic view of the node synchronization process according to an embodiment of the present invention. Referring to FIG. 1, particularly, an SRNC sends a downlink node synchronization request including SRNC local time information T1 to a drift radio network controller (DRNC) through an HS-DSCH FP, the DRNC forwards the downlink node synchronization request including T1 to a base station. The time when the base station receives the request is T2, and then the base station processes the request and returns an uplink node synchronization response through the HS-DSCH FP at the moment of T3, in which the response respectively includes T1, T2, and T3. The DRNC returns the uplink node synchronization response to the SRNC, thereby finishing the node synchronization.

It should be noted that, the HS-DSCH FP in this embodiment differs from the HS-DSCH FP in the prior art in that: the parameter of the node synchronization in the HS-DSCH FP in this embodiment is preset to support the node synchronization.

Referring to FIG. 2, the flow of the method for obtaining the CFN according to an embodiment of the present invention includes the steps as follows.

In Step 201, an RNC sends a downlink node synchronization request including RNC time information to a base station through an HS-DSCH FP.

In this embodiment, the particular steps are given as follows.

An SRNC sends the downlink node synchronization request including SRNC time information to a DRNC through the HS-DSCH FP.

The DRNC forwards the downlink node synchronization request to the base station.

In Step 202, an uplink node synchronization response including base station time information returned from the base station through the HS-DSCH FP is received.

In this embodiment, the particular steps are given as follows.

The DRNC receives the uplink node synchronization response including the base station time information returned from the base station through the HS-DSCH FP.

The DRNC forwards the uplink node synchronization response to the SRNC.

In Step 203, a difference value between the RNC time information and the base station time information is used as a time difference (that is, the time difference is calculated).

Referring to FIG. 1 together, the time difference in this embodiment is the difference value between T1 and T2, that is, RfnBfnDiff=T1-T2.

In Step 204, the CFN is obtained according to a preset RFN, a preset frame offset, the RNC time information, and the base station time information (that is, the CFN is calculated).

In this embodiment, in a process of obtaining the frame offset, the RNC distributes the Frame Offset according to a preset condition, that is, the Frame Offset of the IUR interface radio link. In this embodiment, the preset condition is a span regulated in the protocol, and the particularly regulated span is any integer from 0 to 255. It should be noted that when a new radio link is established, if the new radio link needs not to take the time information of the old radio link as a reference, here the RNC may randomly set the Frame Offset, otherwise, a User Equipment (UE) needs to measure the time difference between correspondingly cells of the new and the old radio links, and then the Frame Offset is obtained. The process that the UE measures the time difference between correspondingly cells of the new and the old radio links is well-known by those skilled in the art, so it is not described here.

In this embodiment, in a process of obtaining the RFN, the RFN is set according the preset condition, for example, when the RNC is just started, the RFN is set to 0, and then the RFN is increased periodically. Then, the set RFN, that is, the time of the RNC side, is obtained.

In the embodiment of the present invention, the manner of calculating the CFN adopted by the RNC side is the same as the manner of calculating the CFN adopted by a terminal side, therefore, the RNC side may calculate the CFN by adopting the manner of calculating the CFN adopted by the terminal side.

The manner of calculating the CFN adopted by the terminal side is subtracting the Frame Offset from a system FN (SFN), and the particular formula is CFN=(SFN-Frame Offset) mod 256.

The SFN is a time value of the cell controlled by the base station, an interval between the time value and base station time value BFN is maximally the size of 0.09 BFN, so when the CFN is calculated, the difference between the SFN and the BFN may be omitted.

In this embodiment, the SFN is approximately (RFN-RfnBfnDiff+327680) mod 327680)/80, the RFN is counted by using 0.125 ms as a unit, that is, every 327680 times (40.96 s) is one cycle, as the CFN is counted by using 10 ms as a unit, a calculation result is divided by 80 to convert to the unit of the CFN. The particular formula is CFN=((RFN-RfnBfnDiff+327680)mod 327680)/80-FrameOffset) mod 256.

Embodiments of the system and the device according to the present invention are described as follows.

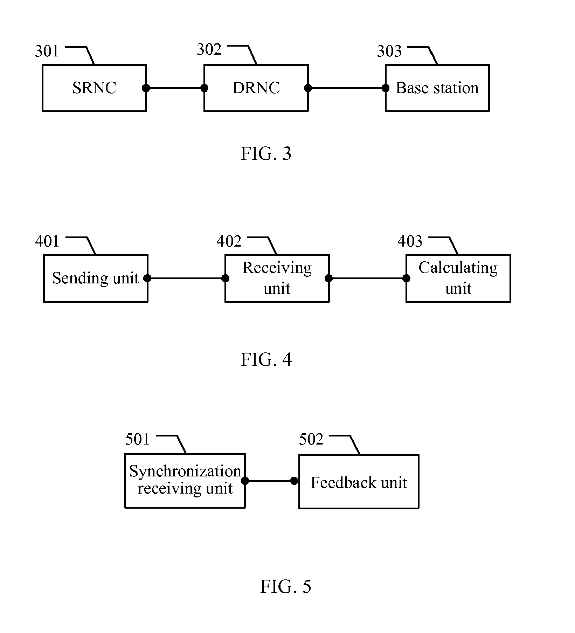

FIG. 3 is a schematic view of the communication system according to an embodiment of the present invention. As shown in FIG. 3, the system includes a SRNC 301 and a base station 303, and further includes a DRNC 302.

The SRNC 301 is configured to send a downlink node synchronization request including SRNC time information to the base station 303 through the DRNC 302, receive an uplink node synchronization response including base station time information returned from the base station 303 through the DRNC 302, and obtain a CFN according to a preset RFN, a preset frame offset, the SRNC time information, and the base station time information.

The DRNC 302 is configured to forward the downlink node synchronization request sent from the SRNC 301 to the base station 303, receive the uplink node synchronization response including the base station time information returned from the base station 303, and forward the response to the SRNC 301.

The base station 303 is configured to return the uplink node synchronization response including the base station time information to the DRNC 302.

In addition, in another embodiment of the present invention, the system may include an SRNC and a base station.

The SRNC is configured to send a downlink node synchronization request including SRNC time information to the base station through an HS-DSCH FP, receive an uplink node synchronization response including base station time information sent from the base station, and obtain a CFN according to a preset RFN, a preset frame offset, the SRNC time information, and the base station time information.

The base station is configured to send the uplink node synchronization response including the base station time information to the SRNC.

The system further includes a setting unit, configured to preset a parameter of a node synchronization in the HS-DSCH FP to support the node synchronization.

FIG. 4 is a schematic structural view of the network device (for example, integrated in an RNC) according to an embodiment of the present invention. As shown in FIG. 4, the network device includes a sending unit 401, a receiving unit 402, and a calculating unit 403.

The sending unit 401 is configured to send a downlink node synchronization request including own time information (for example, RNC time information) to a base station.

The receiving unit 402 is configured to receive an uplink node synchronization response including base station time information returned from the base station.

The calculating unit 403 is configured to obtain a CFN according to a preset RFN, a preset frame offset, the RNC time information, and the base station time information.

The network device further includes a setting unit, configured to preset a parameter of a node synchronization in an HS-DSCH FP to support the node synchronization.

It may be understood that the sending unit 401, the receiving unit 402, the calculating unit 403, and the setting unit may be entirely or partially integrated in the RNC or the HS-DSCH FP, or may be implemented independently.

FIG. 5 is a schematic structural view of the base station according to an embodiment of the present invention. As shown in FIG. 5, the base station includes a synchronization receiving unit 501 and a feedback unit 502.

The synchronization receiving unit 501 is configured to receive a downlink node synchronization request including RNC time information sent from the RNC.

The feedback unit 502 is configured to return an uplink node synchronization response including base station time information to the RNC.

The base station further includes a setting unit, configured to preset a parameter of the node synchronization in the HS-DSCH FP to support the node synchronization.

It may be understood that the synchronization receiving unit 501, the feedback unit 502, and the setting unit may be entirely or partially integrated in the HS-DSCH FP, or may be implemented independently.

It is understood by those of ordinary skill in the field that all or a part of the flows of steps in the method may be implemented by instructing relevant hardware with computer programs, in which the programs may be stored in a computer readable storage medium. When the program is executed, the following steps are executed.

The downlink node synchronization request including the RNC time information is sent to the base station through the HS-DSCH FP.

The uplink node synchronization response including the base station time information sent from the base station through the HS-DSCH FP is received.

The CFN is obtained according to the preset RFN, the preset frame offset, the RNC time information, and the base station time information.

The storage medium may be a read only memory (ROM), a magnetic disk, or an optical disk.

The method, the communication system, and the relevant device for obtaining the CFN according to the present invention are described in detail. It will be apparent to those skilled in the art that various modifications and variations can be made to the present invention without departing from the scope or spirit of the invention. In view of the foregoing, it is intended that the present invention cover modifications and variations of this invention provided they fall within the scope of the following claims and their equivalents.

## Claims

1. A method for obtaining a connection frame number, CFN, **characterized by** comprising:
sending a downlink node synchronization request including radio network controller, RNC, time information to a base station through a high-speed downlink shared channel, HS-DSCH, frame protocol, FP;
receiving an uplink node synchronization response including base station time information sent from the base station through the HS-DSCH FP; and
obtaining a CFN according to a preset RNC frame number, RFN, a preset frame offset, the RNC time information and the base station time information.

2. The method according to claim 1, further comprising:
presetting a parameter of a node synchronization in the HS-DSCH FP to support the node synchronization.

3. The method according to claim 1 or 2, wherein the obtaining the CFN according to the preset RNC frame number, RFN, the preset frame offset, the RNC time information and the base station time information comprises:
obtaining a time difference according to the RNC time information and the base station time information; and
obtaining the CFN according to subtracting the preset frame offset from a value calculated by subtracting the time difference from the preset RFN.

4. The method according to claim 3, wherein
the sending the downlink node synchronization request including the RNC time information to the base station through the HS-DSCH FP comprises:
sending, by a serving radio network controller, SRNC, a downlink node synchronization request including SRNC time information to a drift radio network controller, DRNC, through the HS-DSCH FP; and
forwarding, by the DRNC, the downlink node synchronization request to the base station through the HS-DSCH FP;
and
the receiving the uplink node synchronization response including the base station time information sent from the base station through the HS-DSCH FP comprises:
receiving, by the DRNC, the uplink node synchronization response including the base station time information sent from the base station through the HS-DSCH FP; and
forwarding, by the DRNC, the uplink node synchronization response to the SRNC through the HS-DSCH FP.

5. A communication system, **characterized by** comprising a serving radio network controller, SRNC, and a base station, wherein
the SRNC is configured to send a downlink node synchronization request including SRNC time information to the base station through a high-speed downlink shared channel, HS-DSCH, frame protocol, FP; receive an uplink node synchronization response including base station time information sent from the base station, and obtain a connection frame number, CFN, according to a preset RNC frame number, RFN, a preset frame offset, the SRNC time information and the base station time information; and
the base station is configured to send the uplink node synchronization response including the base station time information to the SRNC.

6. The communication system according to claim 5, further comprising:
a drift radio network controller, DRNC, configured to forward the downlink node synchronization request sent from the SRNC to the base station, and forward the uplink node synchronization response sent from the base station to the SRNC.

7. The communication system according to claim 5 or 6, further comprising:
a setting unit, configured to preset a parameter of a node synchronization in the HS-DSCH FP to support the node synchronization.

8. A network device, **characterized by** comprising:
a sending unit, configured to send a downlink node synchronization request including radio network controller, RNC, time information to a base station through a high-speed downlink shared channel, HS-DSCH, frame protocol, FP;
a receiving unit, configured to receive an uplink node synchronization response including base station time information sent from the base station through the HS-DSCH FP; and
a calculating unit, configured to calculate a connection frame number, CFN, according to a preset RNC frame number, RFN, a preset frame offset, the RNC time information and the base station time information.

9. The network device according to claim 8, further comprising:
a setting unit, configured to preset a parameter of a node synchronization in the HS-DSCH FP to support the node synchronization.

10. The network device according to claim 8 or 9, wherein the sending unit, the receiving unit, the calculating unit and the setting unit are entirely or partially integrated in one of a RNC, the HS-DSCH FP and a network independently.

11. Abase station, **characterized by** comprising:
a synchronization receiving unit, configured to receive a downlink node synchronization request including radio network controller, RNC, time information sent from a RNC;
a feedback unit, configured to send an uplink node synchronization response including base station time information to the RNC through a high-speed downlink shared channel, HS-DSCH, frame protocol, FP.

12. The base station according to claim 11, further comprising:
a setting unit, configured to preset a parameter of a node synchronization in the HS-DSCH FP to support the node synchronization.

13. The base station according to claim 11 or 12, wherein the synchronization receiving unit, the feedback unit and the setting unit are entirely or partially integrated in one of the HS-DSCH FP and a network independently.

14. A computer readable storage medium, **characterized by** comprising computer program code, wherein the computer program code is implemented by a computer unit, and the computer unit implements the following:
sending a downlink node synchronization request including radio network controller, RNC, time information to a base station through a high-speed downlink shared channel, HS-DSCH, frame protocol, FP;
receiving an uplink node synchronization response including base station time information sent from the base station through the HS-DSCH FP; and
obtaining a connection frame number, CFN, according to a preset RNC frame number, RFN, a preset frame offset, the RNC time information and the base station time information.
